## Europäisches Patentamt
## European Patent Office
## Office européen des brevets

(19)

(11) Numéro de publication: **0 223 622 B1**

(12)
# FASCICULE DE BREVET EUROPEEN

(45) Date de publication du fascicule du brevet:
**27.12.89**

(51) Int. Cl.⁴: **H02B 1/08**, H01R 9/24

(21) Numéro de dépôt: 86401922.9

(22) Date de dépôt: **02.09.86**

(54) **Dispositif d'assemblage de blocs modulaires d'appareillage électrique.**

(30) Priorité: **09.10.85 FR 8514917**

(43) Date de publication de la demande:
**27.05.87 Bulletin 87/22**

(45) Mention de la délivrance du brevet:
**27.12.89 Bulletin 89/52**

(84) Etats contractants désignés:
**DE GB IT**

(56) Documents cités:
**EP-A- 0 132 535
DE-A- 2 232 336
DE-B- 1 227 969
FR-A- 1 245 694
FR-A- 1 563 702
FR-A- 2 198 284
FR-A- 2 328 270
FR-A- 2 497 413
GB-A- 2 016 632
US-A- 4 184 733**

(73) Titulaire: **TELEMECANIQUE, 43-45, Boulevard Franklin Roosevelt, F-92504 Ruell-Malmalson Cedex(FR)**

(72) Inventeur: **Bet, Robert, 19, rue Verrerie, F-21000 Dijon(FR)**
Inventeur: **Pierrot, Henri, 2, rue Guynemer, F-21600 Longvic(FR)**

(74) Mandataire: **Marquer, Francis et al, CABINET MOUTARD 35, avenue Victor Hugo Résidence Champfleury, F-78180 Voisins-le-Bretonneux(FR)**

ACTORUM AG

## Description

La présente invention concerne un dispositif d'assemblage côte à côte de blocs modulaires, notamment de deux boîtiers moulés de logement d'appareillage électrique.

On connaît déjà divers types de dispositif qui permettent d'assembler côte à côte des éléments modulaires entre eux. L'un de ces dispositifs, décrit dans le brevet US 4 184 733, comprend une nervure d'accrochage s'étendant sur le bord supérieur de l'un des éléments et venant s'emboîter dans une nervure conjuguée s'étendant latéralement en saillie à partir du bord supérieur de l'autre élément, de manière à accoupler en charnière les deux éléments. En position accouplée, les deux éléments modulaires sont accolés l'un à l'autre par pivotement de l'un d'eux et sont solidarisés l'un avec l'autre au moyen de deux nervures d'encliquetage réciproque de forme complémentaire formées respectivement sur le bord inférieur des deux éléments.

Toutefois, le fait d'accoupler les deux modules à l'aide de deux nervures d'emboîtement réciproque qui s'étendent sur toute la longueur du bord supérieur de chaque face d'accolement des modules ne garantit pas un positionnement initial précis des deux modules l'un par rapport à l'autre lors de l'emboîtement mutuel des nervures. Pour des modules d'appareillage électrique, il en résulte une imprécision sur l'acouplement des liaisons mécaniques existant entre les modules une fois assemblés, ce qui est particulièrement préjudiciable sur le plan du fonctionnement de l'appareillage.

La présente invention a pour but de remédier à ces inconvénients en proposant un dispositif d'assemblage qui est simple, assure un positionnement initial précis et stable des modules l'un par rapport à l'autre afin d'obtenir un accouplement précis et fidèle des liaisons mécaniques entre modules assemblés et permet un assemblage rapide qui peut être effectué par un personnel non qualifié, notamment par l'utilisateur, et sans l'emploi d'un outillage spécial.

A cet effet, l'invention a pour objet un dispositif d'assemblage côte à côte de blocs modulaires, notamment de deux boîtiers moulés de logement d'appareillage électrique, comprenant :
- des moyens d'emboîtement réciproque agencés de manière à accoupler les deux boîtiers sous la forme d'une charnière, les deux boîtiers en position accouplée étant accolés l'un à l'autre par pivotement de l'un d'eux ;
- des moyens de verrouillage des deux boîtiers accolés l'un à l'autre,
caractérisé en ce que les moyens d'emboîtement réciproque comportent deux crochets disposés en saillie le long d'un des bords d'une face latérale d'accolement d'un premier boîtier et deux logements conjugués ménagés dans une face latérale opposée d'accolement d'un second boîtier, les crochets emboîtés dans les logements conjugués autorisant le pivotement du premier boîtier de manière que la face latérale d'accolement de ce dernier vienne s'accoler à celle du second boîtier, et en ce que la face latérale d'accolement du premier boîtier présente deux bossages qui s'engagent respectivement dans deux gorges conjuguées ménagées dans la face latérale opposée d'accolement du second boîtier lors de l'emboîtement des crochets dans les logements conjugués, et qui sont disposés respectivement par rapport aux deux crochets de manière à servir de gonds au premier boîtier lors du pivotement de celui-ci en position accouplée.

Dans une application particulière d'assemblage entre boîtiers moulés d'appareillage électrique, du type comprenant chacun deux grandes faces latérales parallèles et, perpendiculairement à celles-ci, une face avant présentant une région centrale formant un étagement et deux régions latérales, une face arrière et deux faces latérales étroites opposées, le dispositif selon l'invention permet d'adjoindre à un boîtier principal, par exemple à un boîtier d'un disjoncteur à un ou plusieurs pôles, des additifs dits "légers" du type par exemple contact auxiliaire ou déclencheur à émission de tension. Pour ce type d'additif, après accolement de sa grande face latérale contre la grande face latérale conjuguée du disjoncteur, le verrouillage s'effectue de préférence au moyen d'une languette souple prévue sur l'additif en reposant transversalement sur l'une des régions latérales de sa face avant, et présentant, à l'une de ses extrémités, un nez en saillie venant s'encliqueter, par simple retombée de la languette, sur une partie conjuguée du disjoncteur.

Toujours dans le cadre de cette application, le dispositif selon l'invention permet également d'adjoindre des additifs dits "lourds" du type par exemple bloc de commande électrique ou dispositif à courant différentiel résiduel, à un boîtier de disjoncteur à plusieurs pôles assemblés entre eux. Pour ce type d'additif, une fois accolé au dernier pôle du disjoncteur, le verrouillage s'effectue au moyen d'une seule vis commune traversant deux ouvertures coaxiales ménagées respectivement dans l'additif et dans le dernier pôle du disjoncteur, et venant se fixer sur un écrou interposé au préalable entre le dernier pôle et le pôle précédent du disjoncteur lors de l'assemblage des pôles entre eux.

Ainsi, à partir d'un boîtier de disjoncteur multipolaire, il est possible de lui adjoindre au moyen du dispositif selon l'invention, d'une part, sur l'une de ses grandes faces latérales, un ou plusieurs additifs "légers" montés en gigogne et, d'autre part, sur son autre grande face latérale, un additif "lourd".

Bien sûr, l'invention ne se limite pas à l'application particulière mentionnée précédemment. Elle propose un dispositif permettant d'assembler, de façon plus générale, des blocs modulaires entre eux, au moyen de deux crochets d'accouplement faisant chacun office de charnière d'axe formé par un bossage associé au crochet, ledit bossage servant également de clavette à l'accouplement des blocs, et d'un système de verrouillage approprié, en particulier par encliquetage ou par vis.

Selon une autre caractéristique de l'invention, le bloc modulaire portant les crochets est également pourvu d'un téton de détrompage en saillie dont la position par rapport à une alvéole conjuguée du bloc associé permet ou non de réaliser l'assemblage des blocs entre eux. Ainsi, ce téton de détrompage permet de répondre à un besoin que l'on rencontre dans l'association de boîtiers d'appareillage électrique, et qui consiste à rendre ininterchangeables certains additifs vis-à-vis d'un ou de plusieurs boîtiers principaux de natures ou de calibres différents.

D'autres avantages de l'invention apparaîtront mieux dans la description détaillée qui suit et se réfère aux dessins annexés donnés uniquement à titre d'exemple et dans lesquels :

La figure 1 représente une vue schématique en perspective de deux boîtiers moulés de mêmes natures, montrés en position séparée avant assemblage;

Les figures 2 à 6 représentent respectivement cinq positions successives prises par les deux boîtiers au cours de leur assemblage, chacun des deux boîtiers étant illustré en coupe suivant la ligne II - II de la figure 1 ;

Les figures 7 et 8 représentent chacune une vue en coupe de l'un des boîtiers suivant la ligne II - II de la figure 1, montrant l'accès d'un tournevis à une vis de serrage d'une borne électrique à travers la languette, respectivement selon deux positions du tournevis ;

La figure 9 représente une vue schématique en perspective de deux boîtiers moulés de natures différentes, montrés en position séparée avant assemblage ;

La figure 10 représente une vue schématique en coupe d'un boîtier de disjoncteur bipolaire auquel est adjoint un additif "lourd" avec un système de verrouillage par vis ; et

La figure 11 représente une vue des faces d'accolement respectives d'un boîtier de disjoncteur et d'un additif, la face de ce dernier étant illustrée partiellement et montrant uniquement le téton de détrompage prévu sur l'additif pour réaliser ou non son adjonction au boîtier de disjoncteur.

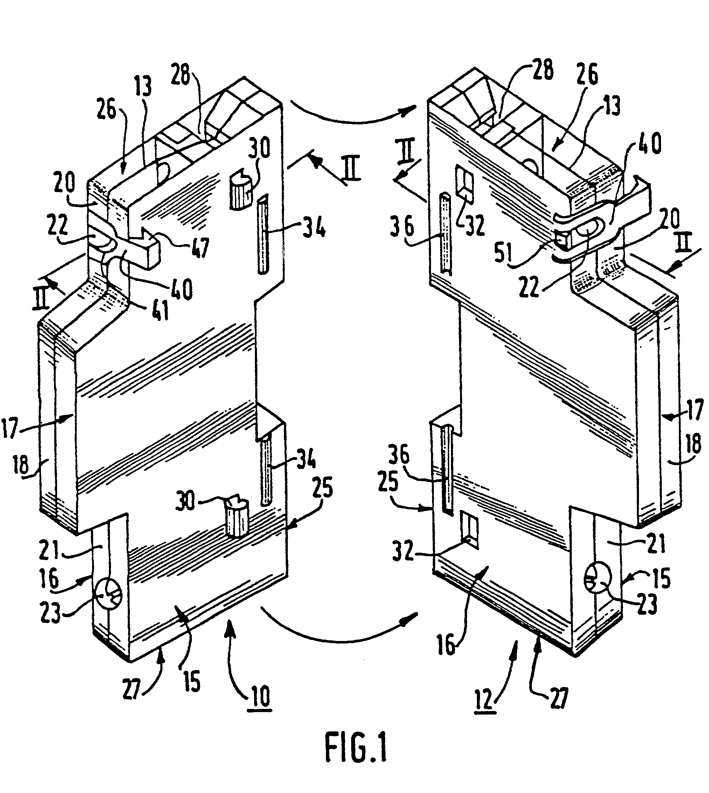

Sur la figure 1, on a représenté en 10 et 12 deux blocs modulaires destinés à être assemblés côte à côte, et en l'occurence deux boîtiers plats moulés, de même nature, contenant chacun les éléments constitutifs par exemple d'un contact auxiliaire, bien connu de l'homme du métier en tant qu'additif dit "léger" à un appareil électrique de base tel qu'un disjoncteur par exemple.

Les deux boîtiers similaires 10, 12 sont chacun formés de deux demi-boîtiers assemblés suivant un plan de symétrie de trace 13 sur la figure 1, et comportent chacun, de façon usuelle, deux grandes faces latérales parallèles 15, 16 contre l'une desquelles peut venir s'appliquer le boîtier adjacent, et perpendiculairement à celles-ci :
- une face avant 17 présentant une région centrale 18 formant un étagement et deux régions latérales 20, 21 munies d'orifices d'accès 22, 23 à des vis de serrage de bornes électriques logées dans le boîtier ;
- une face arrière 25 dont le profil est adapté pour permettre sa fixation sur un rail de support ;
- deux faces latérales étroites 26, 27 comprenant deux orifices respectifs dont un seul est visible en 28 sur la figure 1, permettant l'introduction de conducteurs électriques dans les bornes.

On va maintenant décrire les moyens mis en oeuvre, ainsi que la manière de les utiliser, pour assembler entre eux, conformément à l'invention, les deux boîtiers de contacts auxiliaires 10, 12, en se référant aux figures 1 à 6 pour lesquelles on a choisi de faire venir en accolement le boîtier 10 contre le boîtier 12, par leurs grandes faces latérales conjuguées respectives 15, 16, comme l'indiquent les deux flèches de la figure 1.

Selon l'invention, figure 1, le boîtier 10 comporte sur sa grande face latérale d'accolement 15, deux crochets identiques 30 faisant saillie de celle-ci et disposés tous deux de manière semblable à proximité de la face arrière 25 qui constitue la base du boîtier 10. Ces deux crochets 30 viennent avantageusement de moulage avec le boîtier 10 et leurs rampes d'attaque respectives ont la même orientation de manière à pouvoir s'engager conjointement selon une même incidence dans deux logements conjugués 32 ménagés dans la grande face latérale 16 du boîtier 12.

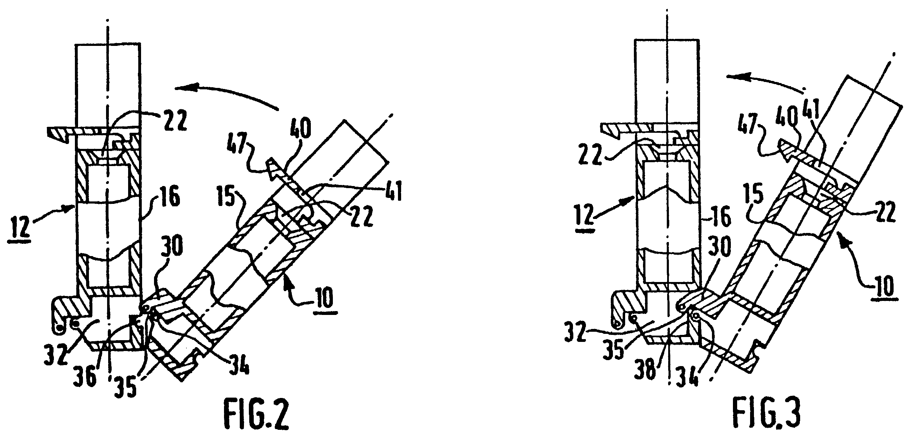

La figure 2 illustre la position du boîtier 10, en début d'assemblage, dans laquelle celui-ci est amené sans hésitation en position accouplée au moyen des deux crochets 30 qui lui servent de guides et qui viennent s'emboîter dans les logements conjugués 32.

Il est important de noter que le fait d'agencer les deux crochets 30 à proximité de la base du boîtier 10 permet d'accoupler les deux boîtiers 10, 12 à la manière d'une charnière autorisant un pivotement du boîtier 10 dans le but de l'accoler à l'autre boîtier 12 au cours de leur assemblage.

A cet effet, figure 1, chacun des deux crochets 30 est associé à un bossage 34, de section droite semi-circulaire par exemple, formé dans la grande face latérale 15 du boîtier 10 et s'étendant parallèlement au bord de ladite face en étant partiellement recouvert par la portion recourbée du crochet associé, à distance de celle-ci, de manière à délimiter un espace interne 35 (figure 2) susceptible de recevoir ultérieurement une partie saillante complémentaire.

Ainsi, lors de l'engagement des deux crochets 30 bu boîtier 10 dans les logements respectifs 32 du boîtier 12, les deux bossages 34 s'engagent également dans des gorges conjuguées 36 ménagées dans la grande face latérale 16 du boîtier 12 et servent ainsi de clavette à l'accouplement des deux boîtiers, ce qui permet de positionner ces derniers l'un par rapport à l'autre avec précision et fidélité.

La figure 3 illustre la position accouplée des deux boîtiers 10, 12 après engagement respectif des crochets 30 et des bossages 34 dans leurs logements 32 et leurs gorges 36. Les deux boîtiers accouplés 10, 12 sont ainsi montés en charnière avec des gonds constitués par les bossages 34 pour auto riser un pivotement du boîtier 10 dans le sens de l'assemblage.

On notera que dans cette position, les deux boîtiers 10, 12 sont accouplés l'un à l'autre d'une manière particulièrement stable, sans possibilité de créer de déplacement en translation de l'un par rapport à l'autre suivant deux axes perpendiculaires contenus dans leur plan d'accolement.

En faisant ensuite pivoter le boîtier 10 en position accouplée autour des bossages 34, dans le sens de l'assemblage tel qu'illustré sur la figure 3, chacun des deux crochets 30 vient s'accrocher sur un rebord 38 prévu dans le logement conjugué 32, en prenant appui sur celui-ci qui s'encastre dans l'espace interne 35 situé entre ledit crochet 30 et le bossage associé 34.

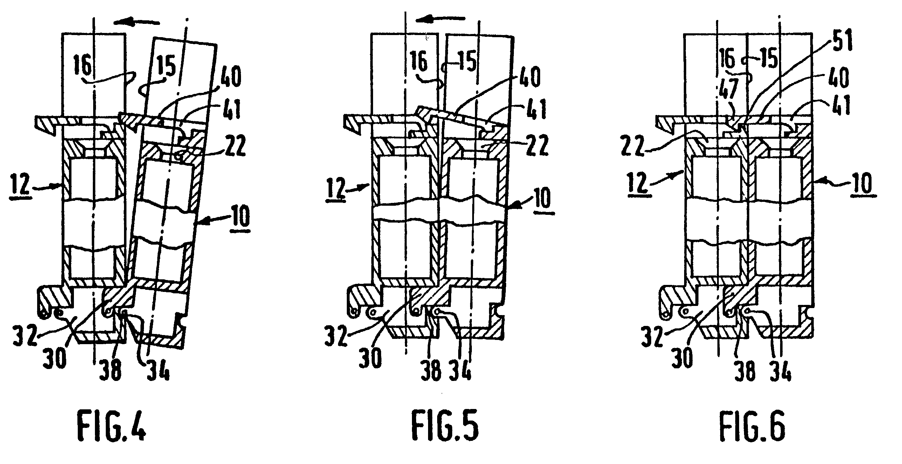

La figure 4 illustre cette position d'accrochage de l'un des crochets 30 du boîtier 10 sur le logement conjugué 32 du boîtier 12.

Dès lors, en poursuivant la rotation du boîtier 10 dans le sens de l'assemblage, celui-ci vient finalement s'accoler contre le boîtier 12.

La figure 5 illustre ainsi une position intermédiaire du boîtier 10 dans laquelle sa grande face latérale 15 se trouve très proche de la grande face latérale conjuguée 16 du boîtier 12, tandis que la figure 6 illustre la position finale d'accolement des deux boîtiers 10, 12 avec leurs deux grandes faces latérales 15, 16 en appui l'une contre l'autre.

Les deux boîtiers 10, 12 en position accolée sont ensuite solidarisés l'un avec l'autre au moyen d'un système de verrouillage que l'on va maintenant décrire.

Selon un mode de réalisation destiné plus particulièrement aux additifs dits "légers" tels que les boîtiers de contacts auxiliaires 10, 12 représentés sur la figure 1, le système de verrouillage utilisé comporte une languette souple 40 (figure 1) prévue sur le boîtier monté pivotant, en l'occurence le boîtier 10.

La languette 40 est disposée à plat sur l'une quelconque des deux régions latérales de la face avant 17 du boîtier 10, par exemple sur la région 20 comme représenté à la figure 1, et elle est agencée perpendiculairement à celle-ci au niveau de l'orifice d'accès 22 à la vis de serrage correspondante de la borne électrique logée dans ce boîtier 10.

Afin de ne pas empêcher l'accès à cette vis de serrage, la languette 40 présente une partie évidée 41 qui communique directement avec l'orifice 22.

Plus en détail, la languette 40 du boîtier 10, qui est rigoureusement identique à celle que l'on a représentée sur le boîtier 12 de la figure 1, est attachée à l'une de ses extrémités, de manière flexible, sur la grande face latérale 16 opposée à celle constituant la face d'accolement des deux boîtiers. Avantageusement, la languette 40 du boîtier 10 vient de moulage avec ce dernier et elle est contenue dans l'épaisseur de la paroi du boîtier d'où elle est issue à l'une de ses extrémités, de façon à ne pas créer d'aspérités nuisibles au bon accolement des deux boîtiers ; la languette 40 du boîtier 10 se termine à son autre extrémité par un nez 47 faisant saillie de l'extérieur de la grande face latérale d'accolement 15 et présentant la même orientation que les crochets 30 portés par cette même face 15.

Ainsi, lors de l'accolement des deux boîtiers 10, 12 par leurs grandes faces latérales 15, 16, le nez de la languette 40 du boîtier 10 vient s'encliqueter, par une simple retombée, sur un redan 51 (figures 1 et 6) prévu dans l'orifice conjugué 22 du boîtier 12.

La figure 6 illustre les deux boîtiers 10, 12 dans leur position finale d'assemblage, c'est-à-dire après accolement de leurs grandes faces latérales et après verrouillage par encliquetage.

Quant au démontage des deux boîtiers 10, 12, il s'opère facilement en soulevant d'abord la languette 40 du boîtier 10 au moyen d'un outil de manière à désolidariser les deux boîtiers, puis en les désaccouplant par pivotement du boîtier 10 dans le sens du démontage.

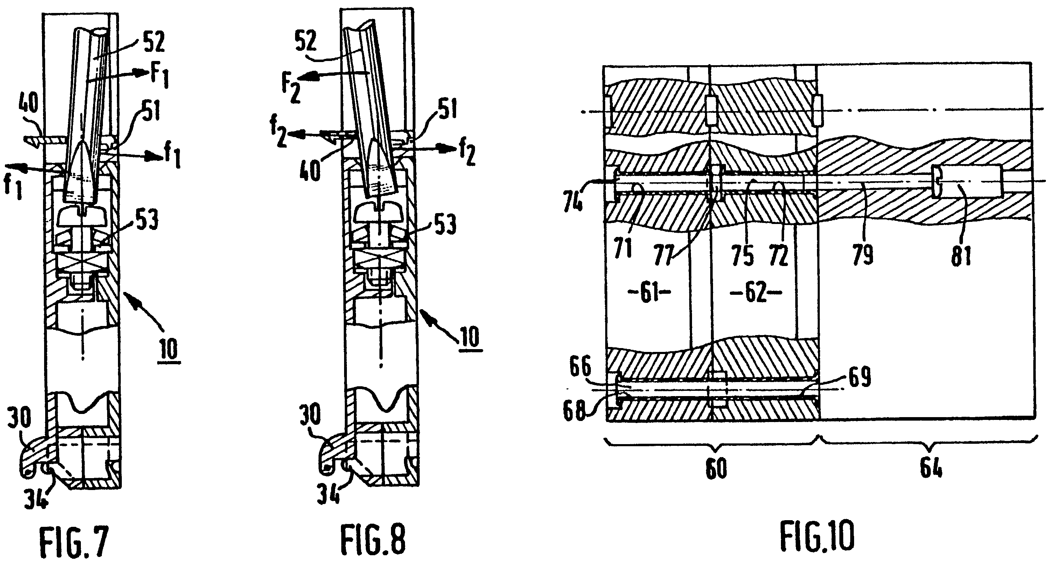

Sur les figures 7 et 8, on a représenté en 52 un outil, tel que par exemple un tournevis, qui traverse la languette 40 du boîtier 10 pour pouvoir accéder à la vis de serrage de la borne électrique repérée en 53 sur ces figures 7 et 8. On note que dans le cas où l'opérateur, avant d'accéder à la vis de serrage, exerce un effort transversal au plan de joint des deux demi-boîtiers formant le boîtier 10, cet effort ne tend absolument pas à séparer l'un de l'autre les deux demi-boîtiers.

En effet, si l'on exerce un effort selon la flèche $F_1$ sur la figure 7, les composantes $f_1$ du couple s'appliquent sur le même demi-boîtier, le redan 51 étant porté par le demi-boîtier de gauche sur la figure 7, de sorte que ledit effort reste interne à ce demi-boîtier et ne provoque donc pas d'interaction d'un demi-boîtier sur l'autre.

Dans le cas d'un effort exercé selon la flèche $F_2$ sur la figure 8, les composantes $f_2$ du couple s'appliquent alors respectivement sur la languette 40 du demi-boîtier de droite et sur le redan 51 du demi-boîtier de gauche ; chaque demi-boîtier tend donc à s'appliquer plus fortement sur l'autre, confirmant ainsi la fermeture du boîtier.

Il va de soi que le boîtier 12 similaire au boîtier 10, comporte lui aussi les mêmes moyens d'assemblage décrits précédemment, afin de pouvoir être lui-même assemblé à un autre boîtier identique, et ainsi de suite de manière à constituer un empilage gigogne qui est seulement limité par le nombre de fonctions mécaniques accouplables.

Egalement, dans le cas où les deux boîtiers 10, 12 remplissent chacun la fonction par exemple de contact auxiliaire, ils sont alors adjoints, séparément ou ensemble, à un boîtier principal par exemple d'un disjoncteur modulaire, selon le même processus d'assemblage décrit ci-dessus.

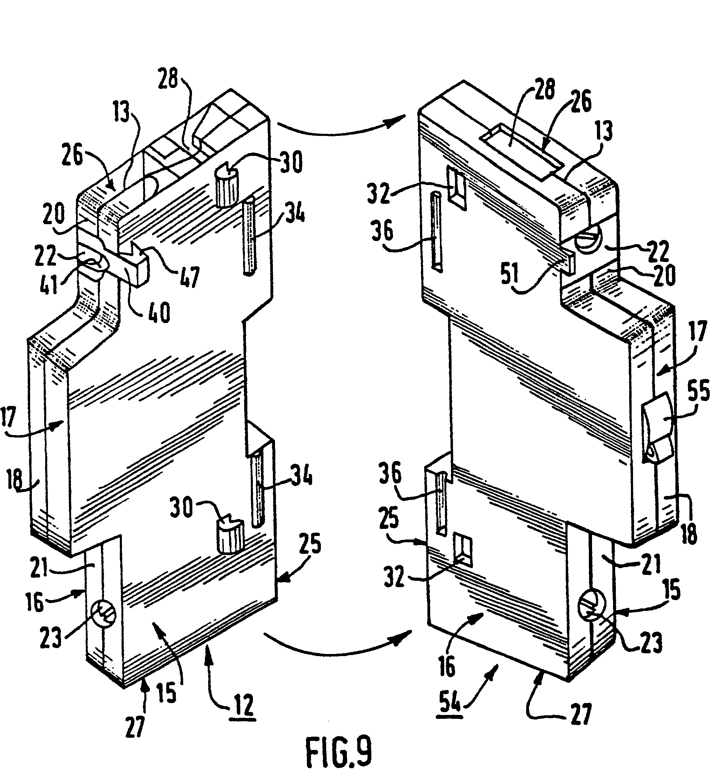

Ainsi, à titre purement illustratif et non limitatif, on a représenté sur la figure 9 en position séparée, l'adjonction souhaitée d'un seul boîtier de contact auxiliaire, tel que par exemple le boîtier 12 illustré en figure 1, à un boîtier de disjoncteur modulaire 54.

Comme on le voit sur cette figure 9, le boîtier de disjoncteur 54 comporte uniquement les parties conjuguées du dispositif d'assemblage selon l'invention; on a repéré en 55 la manette de commande, connue en soi, portée par la face avant 17 du boîtier 54.

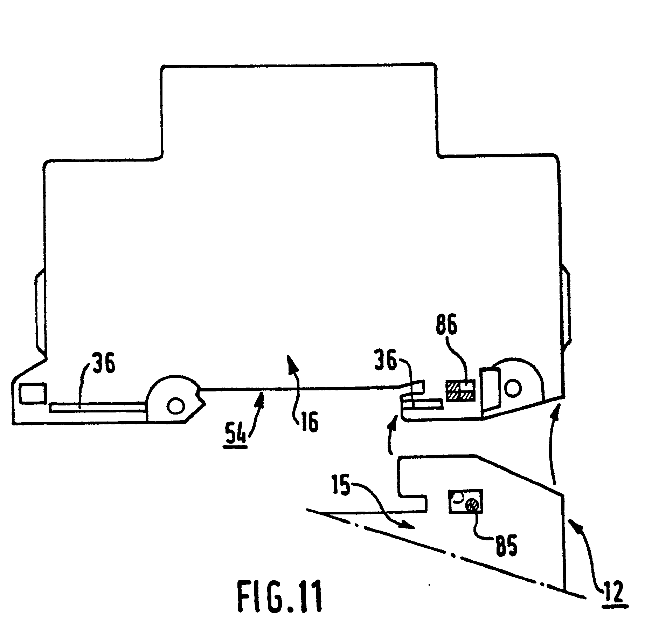

On va maintenant décrire une variante du système de verrouillage des deux boîtiers une fois accolés l'un contre l'autre, en se reportant à la figure 10.

Il est à noter que cette variante s'applique avantageusement, mais non exclusivement, aux additifs dits "lourds" tels que, par exemple, des boîtiers de dispositif à courant différentiel résiduel. D'autre part, comme cela est bien connu de l'homme du métier, ce type d'additif n'est applicable qu'à un boîtier principal composé de plusieurs pôles.

Ainsi, sur la figure 10, on a représenté schématiquement en coupe un boîtier modulaire 60 à deux pôles 61, 62, constituant par exemple un disjoncteur bipolaire, auquel est adjoint un additif "lourd" 64.

Tout d'abord, les deux pôles 61, 62 du disjoncteur sont assemblés entre eux au moyen d'un rivet de liaison 66 s'étendant dans deux ouvertures 68, 69 coaxiales ménagées au travers des pôles respectifs 61, 62.

De plus, les deux pôles 61, 62 sont pourvus respectivement de deux autres ouvertures 71, 72 coaxiales et destinées au passage de deux rivets creux respectifs 74, 75, et un écrou standard 77 est interposé, au moment de l'assemblage des pôles, entre ces deux rivets 74, 75 en étant logé et maintenu dans un épaulement prévu dans chacun des pôles.

Après ce montage des deux pôles 61, 62, l'additif 64 est ensuite assemblé au boîtier de disjoncteur bipolaire 60, et plus précisément, par exemple, au pôle 62 de ce dernier comme représenté sur la figure 10, de la manière suivante.

Tout d'abord, l'additif 64 et le pôle 62 du boîtier de disjoncteur 60 sont accolés l'un contre l'autre par leurs grandes faces latérales conjuguées, d'une manière rigoureusement identique à celle décrite précédemment à propos des figures 1 à 6, c'est-à-dire par accrochage de l'additif sur ledit pôle du boîtier de disjoncteur au moyen des crochets, suivi d'un pivotement de l'additif pour venir se plaquer contre le pôle du boîtier de disjoncteur.

Ensuite, le verrouillage des deux boîtiers accolés 60, 64 s'effectue au moyen d'une seule vis standard commune de liaison 79 passant par une ouverture 81 ménagée à travers l'additif 64 et s'insérant dans le rivet creux 75 prévu dans le pôle 62, pour venir finalement se fixer sur l'écrou 77 préalablement logé et maintenu en sortie dudit rivet 75.

Quant au démontage des deux boîtiers 60, 64, il s'opère aisément par un simple dévissage suivi d'un désaccouplement en faisant pivoter l'additif 64 dans le sens du démontage.

Il est important de noter que ce système de verrouillage par vis présente les avantages suivants :
- une seule vis suffit,
- la vis et l'écrou peuvent être standards,
- la vis traverse uniquement le dernier pôle du produit de base multipolaire, de sorte que la longueur de la vis est limitée seulement à un peu plus d'un pôle et est indépendante de la composition multipolaire du produit de base.

Comme on le voit sur la figure 10, l'additif "lourd" 64 est monté à droite du boîtier principal 60 avec un système de verrouillage par vis ; si on le souhaite, on peut également monter à gauche de ce boîtier principal un ou plusieurs additifs "légers" du type illustré en figure 1, avec un système de verrouillage par encliquetage.

D'autre part, on sait que certains additifs ne doivent pas être interchangés vis-à-vis d'un boîtier principal de nature ou de calibre différent : par exemple, il est souhaitable d'empêcher le montage d'un additif différentiel connu de l'homme du métier,

dont le calibre nominal donné est inférieur à celui du disjoncteur.

Pour assurer cette ininterchangeabilité des additifs, on prévoit sur chaque additif un pion de détrompage dont la position correspond ou non à celle d'une alvéole conjuguée ménagée dans le boîtier principal, afin de réaliser ou non l'adjonction souhaitée.

A titre d'exemple, on a représenté sur la figure 11 la grande face latérale 16 du boîtier de disjoncteur 54 tel qu'illustré en figure 9, contre laquelle est destinée à être accolée la grande face latérale 15, partiellement représentée, de l'additif 12 illustré en figure 9.

Comme il apparaît sur cette figure 11, l'additif 12 porte un téton 85 faisant saillie de sa face d'accolement 15 et venant de moulage avec celui-ci, et dont la position prédéterminée correspond à celle d'une alvéole conjuguée 86 ménagée dans le boîtier 54 à proximité de l'une de ses gorges 36. Dans ces conditions, le téton 85 s'engage dans l'alvéole correspondante 86 lors de la mise en vis-à-vis précise des deux faces latérales 15, 16, de sorte que l'adjonction souhaitée peut être réalisée.

Par contre, dans le cas où le téton 85 occupe la position illustrée en pointillés sur cette figure 11, celui-ci ne trouve pas en vis-à-vis l'alvéole correspondante, de sorte que ledit téton empêche dans ce cas l'assemblage de l'additif avec le boîtier principal.

On notera que l'alvéole propre à chaque boîtier principal différent et le téton correspondant de l'additif peuvent être facilement obtenus dans des moules respectifs au moyen d'une broche à position, connue en soi.

## Revendications

1. Dispositif d'assemblage côte à côte de blocs modulaires, notamment de deux boîtiers moulés de logement d'appareillage électrique, comprenant :
- des moyens (30, 32) d'emboîtement réciproque agencés de manière à accoupler les deux boîtiers sous la forme d'une charnière, les deux boîtiers en position accouplée étant accolés l'un à l'autre par pivotement de l'un d'eux ;
- des moyens (40, 79) de verrouillage des deux boîtiers accolés l'un à l'autre,
caractérisé en ce que les moyens d'emboîtement réciproque comportent deux crochets (30) disposés en saillie le long d'un des bords d'une face latérale d'accolement (15) d'un premier boîtier et deux logements conjugés (32) ménagés dans une face latérale d'accolement (16) d'un second boîtier, les crochets emboîtés dans les logements conjugés autorisant le pivotement du premier boîtier de manière que la face latérale d'accolement de ce dernier vienne s'accoler à celle du second boîtier, et en ce que la face latérale d'accolement (15) du premier boîtier présente deux bossages (34) qui s'engagent respectivement dans deux gorges conjuguées (36) ménagées dans la face latérale d'accolement (16) du second boîtier lors de l'emboîtement des crochets dans les logements conjugués, et qui sont disposés respectivment par rapport aux deux crochets (30) de manière à servir de gonds au premier boîtier lors du pivotement de celui-ci en position accouplée.

2. Dispositif selon la revendication 1, caractérisé en ce que chacun des deux crochets (30) en saillie de la face latérale d'accolement (15) du premier boîtier vient de moulage avec ce dernier.

3. Dispositif selon l'une des revendications 1 ou 2, caractérisé en ce que les moyens de verrouillage comportent une languette souple (40) solidaire du premier boîtier et reposant transversalement sur une face latérale avant (17) du premier boîtier qui est perpendiculaire à sa face latéra le d'accolement (15), et en ce que l'une des extrémités de la languette est issue d'une face latérale du premier boîtier qui est parallèle et opposée à sa face latérale d'accolement (15), tandis que son autre extrémité présente un nez (47) faisant saillie de ladite face latérale d'accolement (15) du premier boîtier et venant s'encliqueter dans une partie conjuguée du second boîtier.

4. Dispositif selon la revendication 3, caractérisé en ce que la partie conjuguée du second boîtier est constituée par un redan (51) disposé dans un orifice (22), lequel est ménagé dans une face latérale avant (17) du second boîtier qui est perpendiculaire à sa face latérale d'accolement (16), le nez de la languette s'accrochant par encliquetage sur le redan.

5. Dispositif selon l'une des revendications 3 ou 4, caractérisé en ce que la languette (40) présente une partie évidée (41) qui communique directement avec un autre orifice (22) ménagé dans la face latérale avant (17) du premier boîtier, de manière à permettre à un outil d'accéder, par cette face avant, à une vis de serrage d'une borne électrique logée dans le premier boîtier.

6. Dispositif selon l'une des revendications 3 à 5, caractérisé en ce que la languette (40) solidaire du premier boîtier vient de moulage avec ce dernier.

7. Dispositif selon l'une des revendications 5 ou 6, caractérisé en ce que les premier et second boîtiers sont identiques et sont chacun pourvus de la languette souple (40) et du redan (51), et en ce que chacun des premier et second boîtiers est formé de deux demi-boîtiers dont l'un porte la languette (40) et l'autre le redan (51), ces deux demi-boîtiers étant assemblés entre eux de manière que le redan vienne se loger dans la partie évidée de la languette, au niveau de la face du boîtier opposée à celle de laquelle fait saillie le nez (47) de la languette.

8. Dispositif selon l'une des revendications 3 à 6, pour l'asemblage d'un boîtier additif (12) à un boîtier principal (54), notamment à un boîtier d'un disjoncteur à un ou plusieurs pôles, chacun des boîtiers comportant deux grandes faces latérales parallèles (15, 16) et, perpendiculairement à celles·ci, une face avant (17) présentant une région centrale (18) formant un étagement et deux régions latérales (20, 21), une face arrière (25) et deux faces latérales étroites opposées (26, 27), lesdits boîtiers s'accolant par leurs grandes faces latérales, caractérisé en ce que les deux crochets (30) en saillie de la grande face latérale d'accolement (15) de l'additif (12) sont disposés en alignement à proximité de la face arrière de ce dernier, et en ce que la languette (40) de l'additif (12) est disposée sur l'une ou l'autre des régions latérales de sa face avant.

9. Dispositif selon l'une des revendications 1 ou 2, caractérisé en ce que les moyens de verrouillage comportent une vis commune de liaison (79) s'étendant dans deux ouvertures qui traversent respectivement les deux boîtiers par leurs faces accolées et qui sont disposées coaxialement l'une à l'autre lorsque les faces respectives des boîtiers sont accolées, ainsi qu'un écrou (77) de fixation de la vis qui est logé et maintenu dans un épaulement prévu dans l'un des boîtiers en sortie de son ouverture.

10. Dispositif selon la revendication 9, pour l'assemblage d'un boîtier additif (64) à un boîtier principal (60), notamment à un boîtier d'un disjoncteur multipolaire constitué par la juxtaposition de plusieurs disjoncteurs à un pôle, chacun des boîtiers comportant deux grandes faces latérales parallèles (15, 16) et, perpendiculairement à celles-ci, une face avant (17) présentant une région centrale (18) formant un étagement et deux régions latérales (20, 21), une face arrière (25) et deux faces latérales étroites opposées (26, 27), ledit additif s'accolant au dernier pôle du disjoncteur par leurs grandes faces latérales, caractérisé en ce que les deux crochets en saillie de la grande face latérale d'accolement de l'additif sont disposés en alignement à proximité de la face arrière de ce dernier, et en ce que l'écrou (77) de fixation de la vis (79) est prévu pour être interposé entre le dernier pôle (62) et le pôle précédent (61) du disjoncteur lors de la juxtaposition des pôles, de sorte que la vis de liaison en sortie de l'additif ne traverse que le dernier pôle du disjoncteur.

11. Dispositif selon l'une des revendications 8 à 10, caractérisé en ce que l'additif comporte sur sa grande face latérale d'accolement, un téton (85) en saillie destiné à coopérer avec une alvéole conjuguée (86) ménagée dans le boîtier principal, et en ce que le téton est positionné par rapport à l'alvéole de telle manière que l'assemblage côte à côte de l'additif et du boîtier principal ne puisse s'opérer que si le téton (85) s'engage dans l'alvéole (86).

**Patentansprüche**

1. Vorrichtung, um modulartige Einheiten so zu verbinden, dass sie nebeneinander angeordnet sind, und insbesondere zwei geformte Gehäuse zur Aufnahme von elektrischer Ausrüstung, mit:
— ineinanderfügbaren Mitteln (30, 32), die so angeordnet sind, dass die beiden Gehäuse scharnierartig gekuppelt werden und die beiden Gehäuse in der gekuppelten Position aneinander anliegen, nachdem eines verschwenkt wurde,
— Mitteln (40, 79) zur Verriegelung der beiden aneinaner anliegenden Gehäuse, dadurch gekennzeichnet, dass die ineinanderfügbaren Mittel zwei Haken (30) aufweisen, welche entlang einem der Ränder einer Seitenanlagefläche (15) eines ersten Gehäuses vorstehen, sowie zwei entsprechende, in der ersten Seitenanlagefläche (16) des zweiten Gehäuses angebrachte, Behausungen eingeführten Haken die Schwenkung des ersten Gehäuses ermöglichen, sodass die Seitenfläche des letzteren gegen die des zweiten Gehäuses zur Anlage kommt, und dass die Seitenfläche (15) des ersten Gehäuses zwei Höcker (34) aufweist, die jeweils in zwei entsprechende, in der Seitenfläche (16) des zweiten Gehäuses angebrachte Vertiefungen (36) eindringen, wenn die Haken in die entsprechenden Behausungen eingeführt werden und besagte Höcker im Verhältnis zu den beiden Haken (30) so angeordnet sind, dass sie dem ersten Gehäuse als Scharnier dienen, wenn dieses in die gekuppelte Stellung geschwenkt wird.

2. Vorrichtung nach Anspruch 1, dadurch gekennzeichnet, dass jeder der beiden Haken (30), der aus der Seitenanlagefläche (15) des ersten Gehäuses vorsteht dieser angeformt ist.

3. Vorrichtung nach einem der Ansprüche 1 oder 2, dadurch gekennzeichnet, dass die Verriegelungsmittel eine elastische Zunge (40) aufweisen, die mit dem ersten Gehäuse fest verbunden ist und quer auf einer vorderen Seitenfläche (17) des ersten Gehäuses ruht, die senkrecht zur seitlichen Anlagefläche (15) verläuft, und dass eines der Enden der Zunge seinen Ursprung in einer Seitenfläche des ersten Gehäuses hat, die parallel zur Seitenanlagefläche (15) und dieser gegenüber angeordnet ist, während ihr anderes Ende eine Nase (47) aufweist, die aus besagter Seitenanlagefläche (15) des ersten Gehäuses hervorsteht und in ein entsprechendes Teil des zweiten Gehäuses eingreift.

4. Vorrichtung nach Anspruch 3, dadurch gekennzeichnet, dass das entsprechende Teil des zweiten Gehäuses von einer Stufe (51) gebildet wird, welche in einer in der Vorderseite (17) des zweiten Gehäuses angebrachten Öffnung (22) angeordnet ist und besagte Seite senkrecht zur Seitenanlagefläche (16) verläuft und die Nase der Zunge rastend in die Stufe eingreift.

5. Vorrichtung nach einem der Ansprüche 3 oder 4, dadurch gekennzeichnet, dass die Zunge (40) einen ausgesparten Teil (41) aufweist, der direkt mit einer anderen, in der Vorderseite (17) des ersten Gehäuses angebrachten Öffnung (22) in Verbindung steht, damit ein Werkzeug durch besagte Vorderseite eine Schraube zur Befestigung einer, in einem ersten Gehäuse angeordneten elektrischen Klemme erreichen kann.

6. Vorrichtung nach einem der Ansprüche 3 bis 5, dadurch gekennzeichnet, dass die mit dem ersten Gehäuse fest verbundene Zunge (40) diesem angeformt ist.

7. Vorrichtung nach einem der Ansprüche 5 oder 6, dadurch gekennzeichnet, dass das erste und zweite Gehäuse identisch ausgebildet und jeweils mit der elastischen Zunge (40) und der Stufe (51) versehen sind, und dass jedes der ersten und zweiten Gehäuse von zwei Gehäusehälften gebildet wird, deren eine die Zunge (40) und deren andere die Stufe (51) aufweist, wobei diese beiden Gehäusehälften so vereint werden, dass die Stufe sich in den ausgesparten Teil der Zunge einfügt und zwar auf der Seite des Gehäuses, die sich gegenüber jeder befindet, aus der die Nase (47) aus der Zunge hervorragt.

8. Vorrichtung nach einem der Ansprüche 3 bis 6, um ein Zusatzgehäuse (12) an ein Hauptgehäuse (54) zu fügen, insbesondere an das Gehäuse eines Unterbrechers mit einem oder mehreren Polen, wobei jedes der Gehäuse zwei grosse, parallele Seitenflächen (15, 16) aufweist und, senkrecht dazu, eine Vorderseite (17) mit einer mittleren Zone (18), welche einen Vorsprung bildet und zwei Seitenteilen (20, 21), einer Hinterseite (25) und zwei einander gegenüberliegenden schmalen Seitenflächen (26, 27), wobei besagte Gehäuse mittels ihrer grossen Seitenflächen gegeneinander zur Anlage kommen, dadurch gekennzeichnet, dass die beiden Haken (30), die aus der grossen Seitenanlagefläche (15) des Zusatzes (12) hervorragen, in Reihe in der Nähe der Hinterseite des letzteren angeordnet sind und dass die Zunge 40) des Zusatzes (12) auf dem einen oder anderen der Seitenteile seiner Vorderseite angeordnet ist.

9. Vorrichtung nach einem der Ansprüche 1 oder 2, dadurch gekennzeichnet, dass die Verriegelungsmittel eine gemeinsame Verbindungsschraube (79) aufweisen, die durch zwei Durchgangsöffnungen durch die aneinander anliegenden Wände der beiden Gehäuse reicht, welche koaxial zueinander angeordnet sind, wenn die entsprechenden Seiten der Gehäuse aneinander anliegen, sowie eine Mutter (77) zur Befestigung der Schraube, wobei die besagte Mutter in einem Absatz angeordnet ist und gehalten wird, der in einem der Gehäuse am Ende seiner Öffnung vorgesehen ist.

10. Vorrichtung nach Anspruch 9, zum Aneinanderfügen eines Zusatzgehäuses (64) und eines Hauptgehäuses (60), insbesondere an das Gehäuse eines durch Nebeneinanderordnen mehrerer Einpolunterbrecher gebildeten Mehrpolunterbrechers, wobei jedes der Gehäuse zwei grosse, parallele Seitenflächen (15, 16) aufweist und, senkrecht dazu, eine Vorderseite (17) mit einer mittleren Zone (18), die einen Absatz bildet und zwei Seitenteilen (20, 21), einer Rückseite (25) und zwei schmalen einander gegenüberliegenden Seitenflächen (26, 27), wobei besagter Zusatz an den letzten Pol des Unterbrechers mittels der grossen Seitenflächen angefügt wird, dadurch gekennzeichnet, dass die beiden aus der grossen Seitenanlagefläche des Zusatzes hervorragenden Haken in Reihe in der Nähe der Rückseite des letzteren angeordnet sind, dass die Mutter (77) zur Befestigung der Schraube (79) so vorgesehen ist, dass sie beim Aneinanderfügen der Pole zwischen den letzten Pol (62) und den vorletzten Pol (61) des Unterbrechers durchquert.

11. Vorrichtung nach einem der Ansprüche 8 bis 10, dadurch gekennzeichnet, dass der Zusatz auf seiner grossen Seitenanlagefläche einen hervorspringenden Ansatz (85) aufweist, der mit einer entsprechenden, im Hauptgehäuse angebrachten Vertiefung (86) zusammenarbeitet und dass der Ansatz im Verhältnis zur Vertiefung so angeordnet ist, dass das Nebeneinanderfügen des Zusatzes und des Hauptgehäuses nur dann stattfinden kann, wenn der Ansatz (85) in die Vertiefung (86) eingreift.

## Claims

1. A device for assembling modular blocks side by side, particularly two molded cases housing electric equipment, including:
   - reciprocal engagement means (30, 32) adapted so as to couple the two cases together in the form of a hinge, the two cases in the coupled position being applied one against the other by pivoting one of them;
   - means (40, 79) for locking the two cases applied one against the other; characterized in that said reciprocal engagement means include two hooks (30) disposed projecting along one of the edges of a lateral engagement face (15) of the first case and two mating housings (32) formed in a lateral engagement face (16) of a second case, the hooks engaged in the mating housings allowing the first case to pivot so that the lateral engagement face thereof is applied against that of the second case, and the lateral engagement face (15) of the first case has two bosses (34) which engage respectively in two mating grooves (36) formed in the lateral engagement face (16) of the second case during engagement of the hooks in the mating housings, and which are disposed respectively with respect to the two hooks (30) so as to serve as hinge-pins for the first case during pivoting thereof in the coupled position.

2. The device as claimed in claim 1, characterized in that each of the two hooks (30) projecting from the lateral engagement face (15) of the first case are integrally molded therewith.

3. The device as claimed in one of claims 1 or 2, characterized in that said locking means include a flexible tongue (40) integral with the first case and resting transversely on a front lateral face (17) of the first case which is perpendicular to its lateral engagement face (15) and in that one of the ends of the tongue is integral with a lateral face of the first case which is parallel to and opposite its lateral engagement face (15), whereas its other end has a nose (47) projecting from said lateral engagement face (15) of the first case and snap-fitting in a mating part of the second case.

4. The device as claimed in claim 3, characterized in that the mating part of the second case is formed by a step (51) disposed in an orifice (22), which is formed in a front lateral face (17) of the second case which is perpendicular to its lateral engagement face (16), the nose of the tongue snap-fitting on to the step.

5. The device as claimed in one of claims 3 or 4, characterized in that the tongue (40) has a recessed part (41) which communicates directly with another orifice (22) formed in the front lateral face (17) of the first case, so as to allow a tool to have access, through this front face, to a screw clamping an electric terminal housed in the first case.

6. The device as claimed in one of claims 3 to 5, characterized in that the tongue (40) integral with the first case is molded integrally therewith.

7. The device as claimed in one of claims 5 or 6, characterized in that the first and second cases are identical and each has the flexible tongue (40) and the step (51), and in that each of the first and second cases is formed of two half-cases one of which carries the tongue (40) and the other the step (51), these two half-cases being assembled together so that the step is engaged in the recessed part of the tongue, at the level of the face of the case opposite that from which the nose (47) projects.

8. The device as claimed in one of claims 3 to 6, for assembling an additional case (12) with a main case (54), particularly with a case of a circuit breaker with one or more poles, each of the cases having two large lateral parallel faces (15, 16) and, perpendicular thereto, a front face (17) with a central region (18) forming a step and two lateral regions (20, 21), a rear face (25) and two opposite narrow lateral faces (26, 27), said cases being applied against each other by their large lateral faces, characterized in that the two hooks (30) projecting from the large lateral engagement face (15) of the addition (12) are disposed in alignment close to the rear face thereof, and the tongue (40) of the addition (12) is disposed on one or other of the lateral regions of its front face.

9. The device as claimed in one of claims 1 or 2, characterized in that the locking means include a common connecting screw (79) extending through two openings which pass respectively through the two cases through their engaged faces and which are disposed coaxially with each other when the respective faces of the cases are applied against each other, as well as a nut (77) for fixing the screw which is housed and held in a shoulder provided in one of the cases at the outlet of its opening.

10. The device as claimed in claim 9, for assembling an additional case (64) with a main case (60), particularly with a case of a multipole circuit breaker formed by the juxtaposition of several single-pole circuit breakers, each of the cases having two large lateral parallel faces (15, 16) and, perpendicular thereto, a front face (17) with a central region (18) forming a step and two lateral regions (20, 21), a rear face (25) and two opposite narrow lateral faces (26, 27), said addition being applied to the last pole of the circuit breaker by their large lateral faces, characterized in that the two hooks projecting from the large lateral engagement face of the addition are disposed in alignment close to the rear face thereof, and in that the nut (77) for fixing the screw (79) is provided to be interposed between the last pole (62) and the preceding pole (61) of the circuit breaker during juxtapositioning of the poles, so that the connecting screw, on coming out of the addition only passes through the last pole of the circuit breaker.

11. The device as claimed in one of claims 8 to 10, characterized in that the addition has on its large lateral engagement face a projecting pin (85) intended to cooperate with a mating pocket (86) formed in the main case, and in that the pin is positioned with respect to the pocket so that the side by side assembly of the addition and of the main case can only take place if the pin (85) is engaged in the pocket (86).

FIG.1

FIG.2

FIG.3

EP 0 223 622 B1

FIG.4

FIG.5

FIG.6

EP 0 223 622 B1

FIG.7

FIG.8

FIG.10

EP 0 223 622 B1

FIG.9

FIG.11